# EUROPEAN PATENT APPLICATION

(11) **EP 1 817 968 A1**
(43) Date of publication of application: **15.08.2007**
(21) Application number: 06101655.6
(22) Date of filing: 14.02.2006
(51) Int. Cl.: A43B 13/20

(54) **Cushion pad for shoes**

(71) Applicant: I SHING TRADE CO., LTD., Taichung City (TW)
(72) Inventor: Wang, Jack I Shing Trade Co., LTD., Taichung City TAIWAN (CN)
(74) Representative: Chaillot, Geneviève

(57) **Abstract**

A cushion pad for shoes includes a top plate, a bottom plate and a flexible mediate portion connected between the top plate and the bottom plate. The flexible mediate portion includes a plurality of straight plates perpendicularly connected to the top plate and the bottom plate, and inclined plates are connected between the straight plates extending from the top plate and the bottom plate.

## Description

### FIELD OF THE INVENTION

The present invention relates to a cushion pad for shoes and includes a top plate, a bottom plate and a flexible mediate portion connected between the top plate and the bottom plate.

### BACKGROUND OF THE INVENTION

One of the conventional cushion members for shoes is a bladder which is inserted in the shoe sole and air in the bladder is compressible so as to absorb shocks and the weight of the wearer. Nevertheless, the bladder is not air-permeable so that the foot in the shoe is suffered by sweater and heat. Besides, once the bladder is broken, the function is completely gone and the bladder cannot be replaced so that the wearer has to discard the shoes. The bladders require special equipment to manufacture and this means a high manufacturing cost is involved. Another cushion pad known to applicant is disclosed in Germany Utility Model 202004012472.

The present invention intends to provide a cushion pad that is easily to be manufactured and includes a plurality of flexible members clamped between a top plate and a bottom plate. The sizes, shapes and arrangements of the flexible members can be varied according to needs.

### SUMMARY OF THE INVENTION

The present invention relates to a cushion pad that comprises a top plate, a bottom plate and a flexible mediate portion connected between the top plate and the bottom plate. The top plate, the bottom plate and the flexible mediate portion are made as a one piece by way of plastic injection which is easily to be manufactured.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows a first embodiment of the cushion pad of the present invention;
Fig. 2 shows that the straight plates of the flexible mediate portion in Fig. 1 are deformed;
Fig. 3 shows a second embodiment of the cushion pad of the present invention;
Fig. 4 shows a third embodiment of the cushion pad of the present invention;
Fig. 5 shows a fourth embodiment of the cushion pad of the present invention;
Fig. 6 shows a fifth embodiment of the cushion pad of the present invention;
Fig. 7 shows that the fourth embodiment of the cushion pad is compressed from the top thereof;
Fig. 8 shows that the fifth embodiment of the cushion pad is compressed from the top thereof;
Fig. 9 is a perspective view of the fourth embodiment of the cushion pad of the present invention;
Fig. 10 is a perspective view of the fifth embodiment of the cushion pad of the present invention;
Fig. 11 shows a first combination form of the fifth embodiment of the cushion pad;
Fig. 12 shows a plain view of the two parts of the first combination form of the fifth embodiment of the cushion pad;
Fig. 13 shows a second combination form of the fifth embodiment of the cushion pad;
Fig. 14 is a plain view of the second combination form of the fifth embodiment of the cushion pad in Fig. 13;
Fig. 15 shows a plain view of the second combination form of the fifth embodiment of the cushion pad;
Fig. 16 shows a third combination form of the fifth embodiment of the cushion pad;
Fig. 17 is a plain view of the third combination form of the fifth embodiment of the cushion pad in Fig. 16;
Fig. 18 shows a plain view of the third combination form of the fifth embodiment of the cushion pad;
Fig. 19 shows a sixth embodiment of the cushion pad of the present invention;
Fig. 20 shows a seventh embodiment of the cushion pad of the present invention, and
Fig. 21 is a side view to show that the fifth embodiment of the cushion pad in a sport shoe.

### DETAILED DESCRIPTION OF THE PREFERRED EMBODIMENT

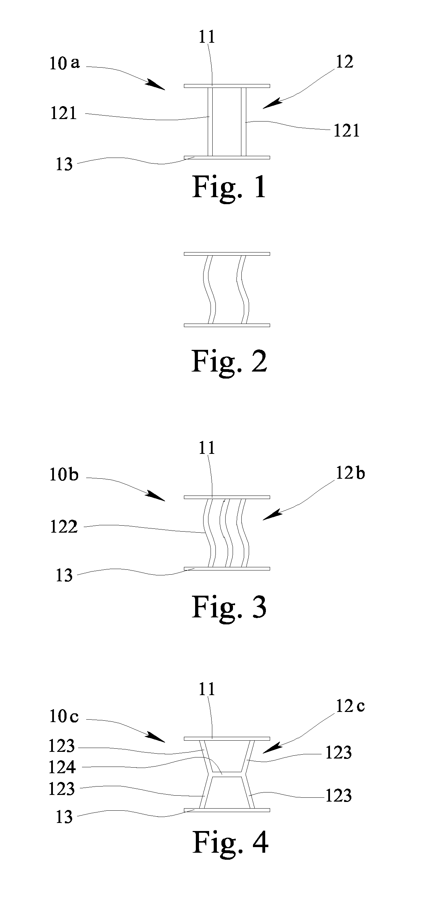

Referring to Figs. 1 and 2, a first embodiment of the cushion pad 10a of the present invention includes a top plate 11, a bottom plate 13 and a flexible mediate portion 12 which is integrally connected between the top plate 11 and the bottom plate 13 by way of plastic injection. The flexible mediate portion 12 includes straight plates 121 connected between the top plate 11 and the bottom plate 13, so that when the flexible mediate portion 12 is applied by a load, the straight plates 121 are deformed to absorb the load. A gap between the straight plates 121 is over 5 mm.

Fig. 3 shows a second embodiment of the cushion pad 10b of the present invention and the flexible mediate portion 12b includes curved plates 122 connected between the top plate 11 and the bottom plate 13. A gap between the curved plates 122 is over 5 mm. Fig. 4 shows a third embodiment of the cushion pad 10c of the present invention and the flexible mediate portion 12c includes a plurality of H-shaped members. Each H-shaped member includes straight plates 123 respectively and inclinedly connected to the top plate 11 and the bottom plate 13 and a horizontal plate 124 is connected between the straight plates 123 extending from the top plate 11 and the bottom plate 13. Two sides of each of the H-shaped members are bent inward at a middle portion thereof and the horizontal plate 124 is connected between the two bent middle portions of the two sides of each H-shaped member.

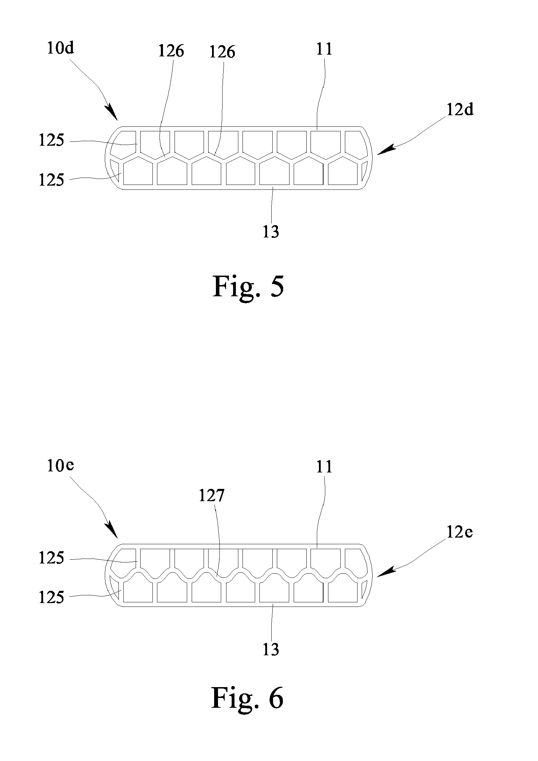

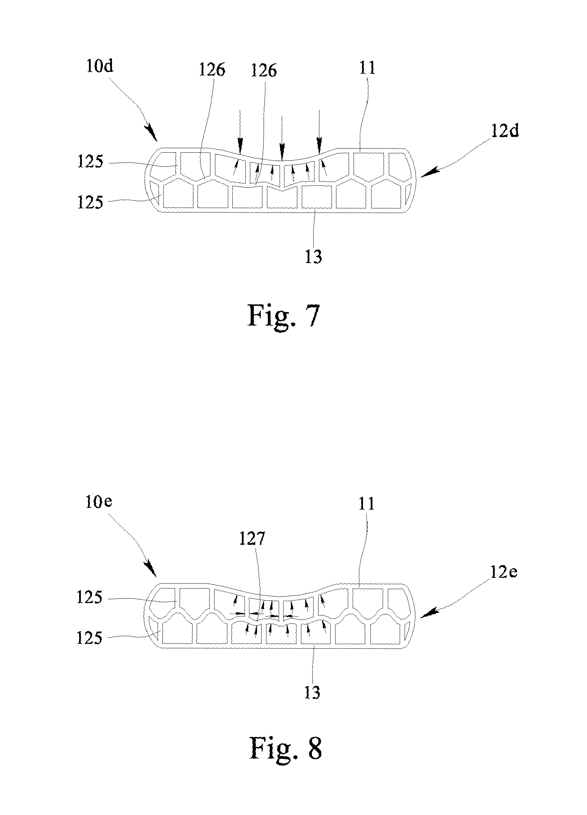

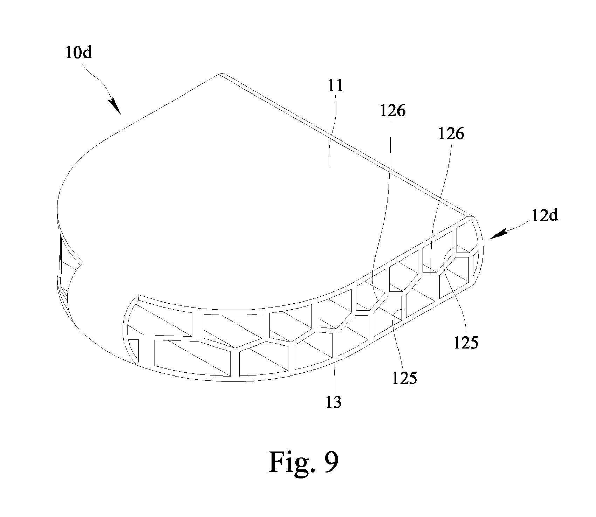

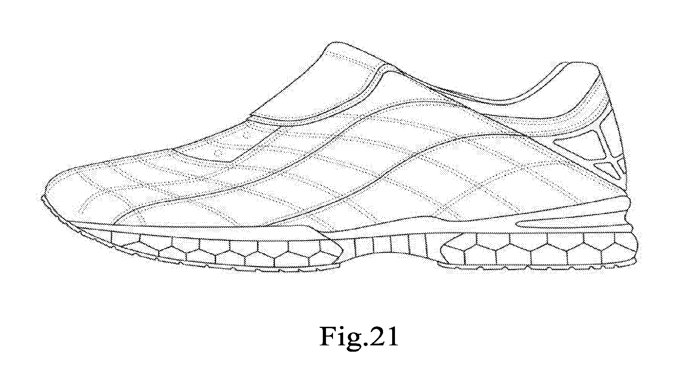

Referring to Figs. 5, 7, 9 and 21, the flexible mediate portion 12d of the fourth embodiment of the cushion pad 10d of the present invention includes a plurality of straight plates 125 perpendicularly connected to an underside of the top plate 11 and a top of the bottom plate 13. The straight plates 125 connected to the top plate and the straight plates 125 connected to the bottom plate 13 are arranged alternatively and a plurality of inclined plates 126 are connected between the lower ends of the straight plates 125 connected to the top plate 11 and top ends of the straight plates 125 connected to the bottom plate 13. Therefore, multiple pentagonal-shaped chambers are defined between the straight plates 125 and the inclined plates 126. A gap between the straight plates 125 is 1 mm to 3 mm. When a load is applied to a top of the cushion pad 10d, the top plate 11, the straight plates 125 on the top plate 11 and the inclined plates 126 are deformed so absorb the load. The air in the chambers is compressible and supports the load.

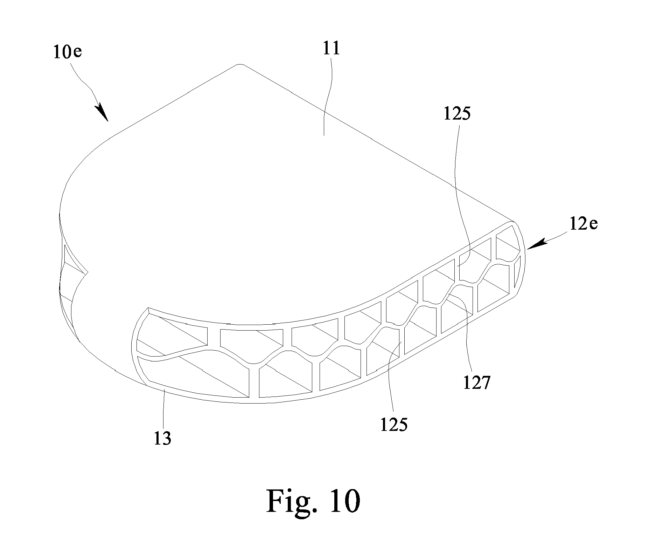

Referring to Figs. 6, 8 and 10, the flexible mediate portion 12e of the fifth embodiment of the cushion pad 10e of the present invention includes a plurality of straight plates 125 perpendicularly connected to an underside of the top plate 11 and a top of the bottom plate 13. The straight plates 125 connected to the top plate and the straight plates 125 connected to the bottom plate 13 are arranged alternatively and a plurality of wave-shaped plates 127 are connected between the lower ends of the straight plates 125 connected to the top plate 11 and top ends of the straight plates 125 connected to the bottom plate 13. Therefore, multiple chambers are defined between the straight plates 125 and the wave-shaped plates 127. A gap between the straight plates 125 is 1 mm to 3 mm.

The thickness of the flexible mediate portion is in a range of 1 mm to 3 mm and a height of the flexible mediate portion is in a range of 5 mm to 25 mm. A thickness of the top plate is 1 mm to 3 mm and a thickness of the bottom plate is 1 mm to 3 mm.

It is noted that the flexible mediate portion can also be composed of several sections which have different heights. The gaps between the straight plates 125 can be varied according to needs.

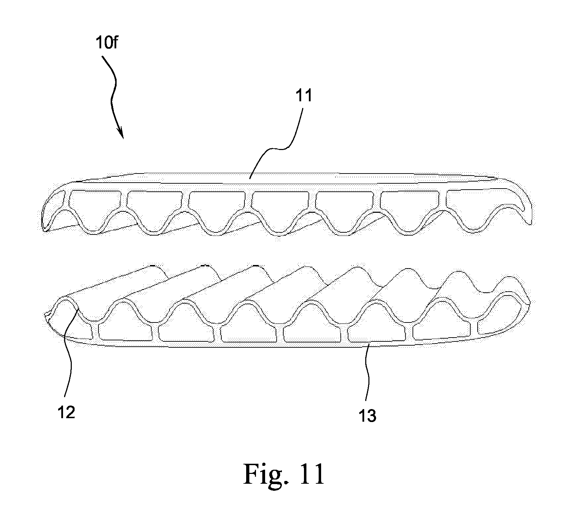

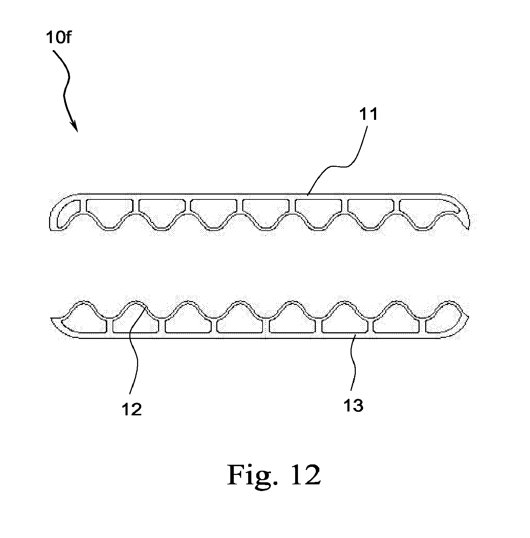

Figs. 11 and 12 show a first combination form 10f of the fifth embodiment of the cushion pad. The first combination form 10f is composed of two parts which are the upper part and the lower part, wherein the upper part includes the top plate 11, the straight plates and the wave-shaped plates 13, and the lower part includes the bottom plate 12, the straight plates and the wave-shaped plates 13. The upper part and the lower part are connected with each other. The top plate 11 is made by softer material to increase the cushion feature and the bottom plate 12 is made by stiff material to provide stability.

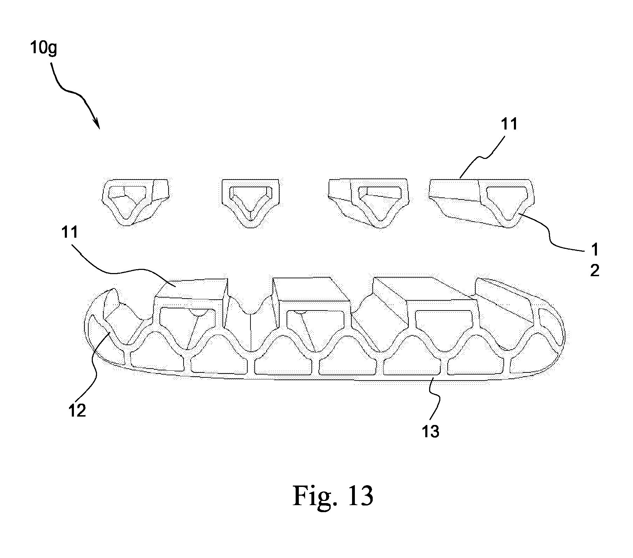

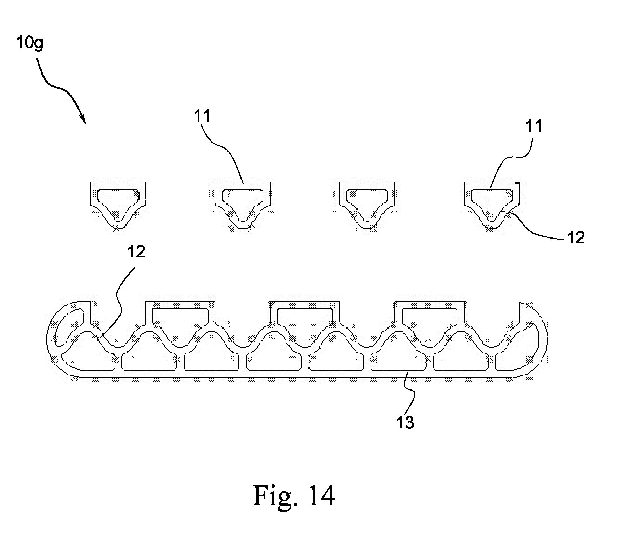

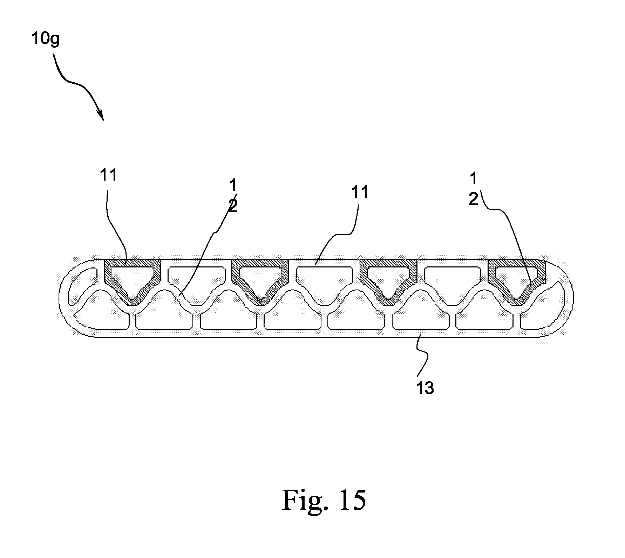

Figs. 13 to 15 show a second combination form 10g of the fifth embodiment of the cushion pad. The second combination form 10g includes several sub-parts and a lower part. Each sub-part is composed of the top plate 11, the straight plates and the wave-shaped plates 13. The lower part includes the bottom plate 12, the straight plates and the wave-shaped plates 13. The lower part further includes some portions which are the same as the sub-parts are fixed to the lower part and the sub-parts are then connected to the lower part to form the cushion pad. The top plate 11 is made by softer material to increase the cushion feature and the bottom plate 12 is made by stiff material to provide stability.

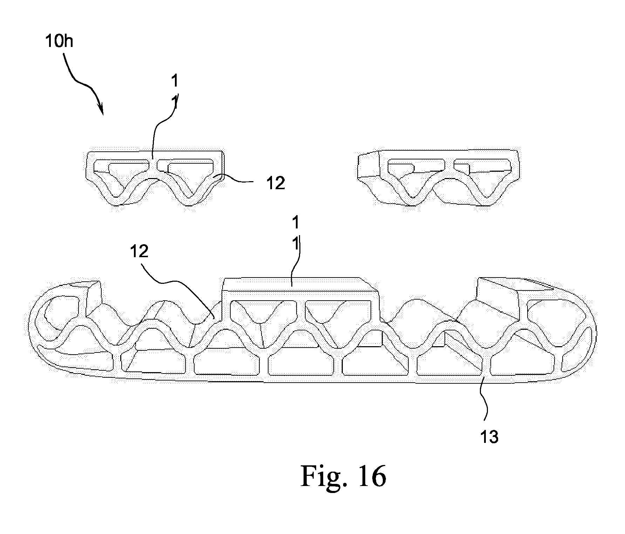

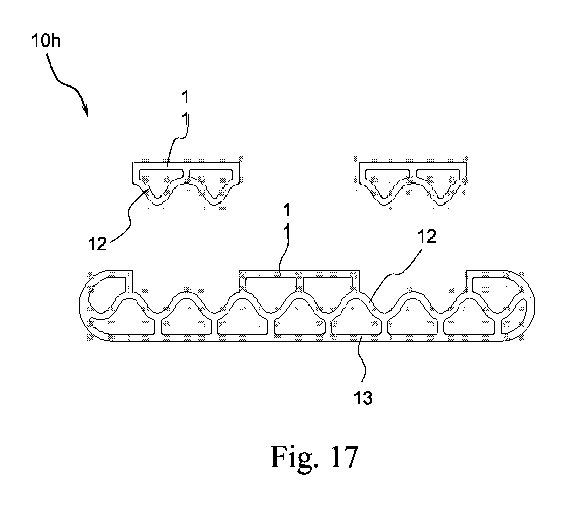

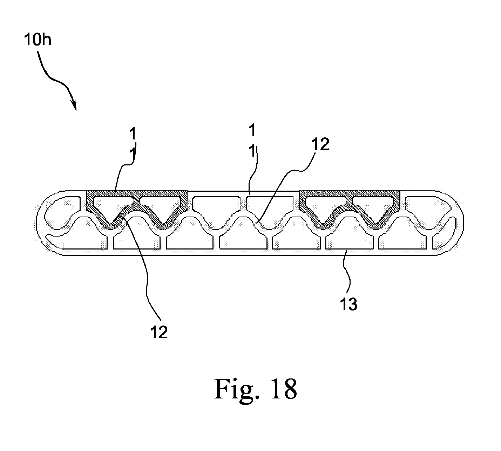

Figs. 16 to 18 show a third combination form 10h of the fifth embodiment of the cushion pad. The third combination form 10h includes several sub-parts and a lower part. Each sub-part is a combination of two sub-parts in Figs. 13 to 15. The lower part includes the bottom plate 12, the straight plates and the wave-shaped plates 13. Some portions are fixed to the lower part and the sub-parts are then connected to the lower part to form the cushion pad. The top plate 11 is made by softer material to increase the cushion feature and the bottom plate 12 is made by stiff material to provide stability.

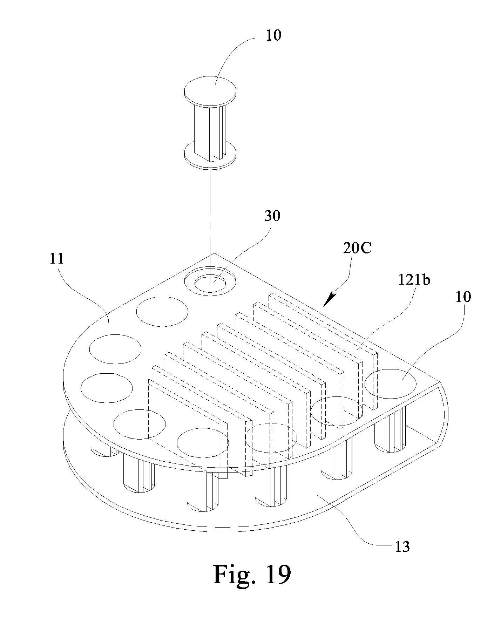

Fig. 19 shows a sixth embodiment of the cushion pad which includes a flexible mediate portion 20C connected between the top plate 11 and the bottom plate 13. A plurality of holes 30 are defined in the top plate 11 and the bottom plate 13, and the holes 30 are arranged in U-shape so that cushion rods 10 are inserted into the holes 30. A plurality of flexible straight pads 121b connected between the top and bottom plates 11, 13. The flexible straight pads 121b are located parallel with a small gap defined therebetween.

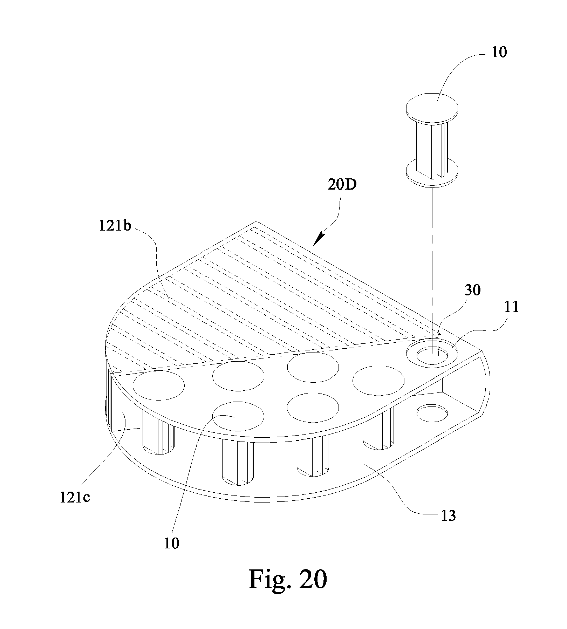

Fig. 20 shows a seventh embodiment of the cushion pad which includes a flexible mediate portion 20D connected between the top plate 11 and the bottom plate 13. A separation plate 121c is located between the top and bottom plates 11, 13 so as to define two areas between the top plate 11 and the bottom plate 13. One of the areas includes a plurality of holes 30 defined in the top plate 11 and the bottom plate 13 so that cushion rods 10 are inserted into the holes 30. The other area includes a plurality of flexible straight pads 121b connected between the top and bottom plates 11, 13.

While we have shown and described the embodiment in accordance with the present invention, it should be clear to those skilled in the art that further embodiments may be made without departing from the scope of the present invention.

## Claims

1. A cushion pad comprising:
a top plate;
a bottom plate, and
a flexible mediate portion connected between the top plate and the bottom plate.

2. The cushion pad as claimed in claim 1, wherein the flexible mediate portion includes straight plates connected between the top plate and the bottom plate.

3. The cushion pad as claimed in claim 1, wherein the flexible mediate portion includes curved plates connected between the top plate and the bottom plate.

4. The cushion pad as claimed in claim 1, wherein the flexible mediate portion includes a plurality of H-shaped members, each H-shaped member includes straight plates respectively and inclinedly connected to the top plate and the bottom plate and a horizontal plate is connected between the straight plates extending from the top plate and the bottom plate, two sides of each of the H-shaped members are bent inward at a middle portion thereof and the horizontal plate is connected between the two bent middle portions of the two sides of each H-shaped member.

5. The cushion pad as claimed in claim 1, wherein the flexible mediate portion includes a plurality of straight plates perpendicularly connected to the top plate and the bottom plate, the straight plates connected to the top plate and the straight plates connected to the bottom plate are arranged alternatively, a plurality of inclined plates are connected between the lower ends of the straight plates connected to the top plate and top ends of the straight plates connected to the bottom plate, multiple pentagonal-shaped chambers are defined between the straight plates and the inclined plates.

6. The cushion pad as claimed in claim 1, wherein the flexible mediate portion includes a plurality of straight plates perpendicularly connected to the top plate and the bottom plate, the straight plates connected to the top plate and the straight plates connected to the bottom plate are arranged alternatively, a plurality of wave-shaped plates are connected between the lower ends of the straight plates connected to the top plate and top ends of the straight plates connected to the bottom plate, multiple chambers are defined between the straight plates and the wave-shaped plates.

7. The cushion pad as claimed in claim 1, wherein the top plate, the flexible mediate portion and the bottom plate are manufactured individually, the top plate is softer than the bottom plate.

8. The cushion pad as claimed in claim 1, wherein the top plate is made integrally with a part of the flexible mediate portion to form an upper part, the bottom plate are made with a part of the flexible mediate portion to form a lower part, the upper part and the lower part are connected to each other, the top plate is softer than the bottom plate.

9. The cushion pad as claimed in claim 1, wherein a thickness of the flexible mediate portion is in over 1 mm.

10. The cushion pad as claimed in claim 1, wherein a gap defined between the straight plates is over 5 mm.

11. The cushion pad as claimed in claim 3, wherein a gap defined between the curved plates is over 5 mm.

12. The cushion pad as claimed in claim 1, wherein a thickness of the top plate is over 1 mm.

13. The cushion pad as claimed in claim 1, wherein a thickness of the bottom plate is over 1 mm.

14. The cushion pad as claimed in claim 1, wherein the flexible mediate portion includes irregular gaps.

15. The cushion pad as claimed in claim 1, wherein a number of the flexible mediate portion is equal to two or more than two.

16. The cushion pad as claimed in claim 1, wherein a thickness of the flexible mediate portion is over 5 mm and includes regular height and irregular height.
